# EUROPEAN PATENT SPECIFICATION

(11) **EP 1 868 386 B1**
(45) Date of publication and mention of the grant of the patent: **11.09.2013**
(21) Application number: 06728903.3
(22) Date of filing: 10.03.2006
(51) Int. Cl.: H04N 7/173, H04B 1/16, H04N 5/44, H04N 21/422, H04N 21/45, H04N 21/258, H04N 7/00

(54) **TELEVISION SYSTEM, BROADCAST RECEPTION DEVICE, AND OPERATION TERMINAL**
FERNSEHSYSTEM, RUNDFUNKEMPFANGSGERÄT UND BETRIEBSENDGERÄT
SYSTEME DE TELEVISION, DISPOSITIF DE RECEPTION DE DIFFUSION ET TERMINAL DE FONCTIONNEMENT

(30) Priority: 15.03.2005 JP 2005072527
(43) Date of publication of application: 19.12.2007
(73) Proprietor: Panasonic Corporation, Kadoma-shi Osaka 571-8501 (JP)
(72) Inventor: ITO, Yoshinobu c/o Matsushita El. Ind. Co., Ltd., Chuo-ku, Osaka-shi, Osaka 540-6319 (JP)
(74) Representative: Pautex Schneider, Nicole Véronique
(86) International application number: PCT/JP2006/304735
(87) International publication number: WO 2006/098239

(56) References cited:
- WO-A2-2005/004077
- JP-A- 11 041 566
- JP-A- 11 191 869
- JP-A- 2000 101 941
- JP-A- 2000 253 325
- JP-A- 2001 094 900
- JP-A- 2001 275 048
- JP-A- 2001 275 056
- JP-A- 2002 118 768
- JP-A- 2003 116 074
- US-A- 5 585 865
- US-A- 5 682 511
- US-A1- 2003 120 831
- US-A1- 2004 103 434

## Description

### TECHNICAL FIELD

The present invention relates to television systems, broadcast reception devices and operation terminals, such as television broadcast reception devices and set top boxes, which receive television broadcast programs, streaming data and the like, and recommend programs to the user's taste.

### BACKGROUND ART

In recent years, digital broadcasting has progressed, and it has become possible for different programs to have extra information. There is a program recommending function for recommending programs to the user's taste and showing this program information using the above described extra information and the viewer's viewing history. Unexamined Japanese Patent Publication No.2002-112186 discloses a technology for showing information on recommended programs in a display format in accordance with the degree of recommendation of the programs.

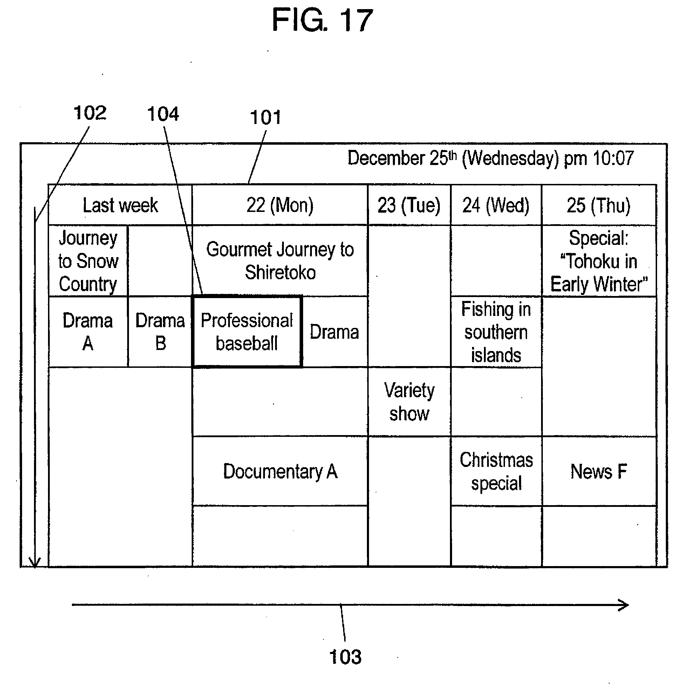

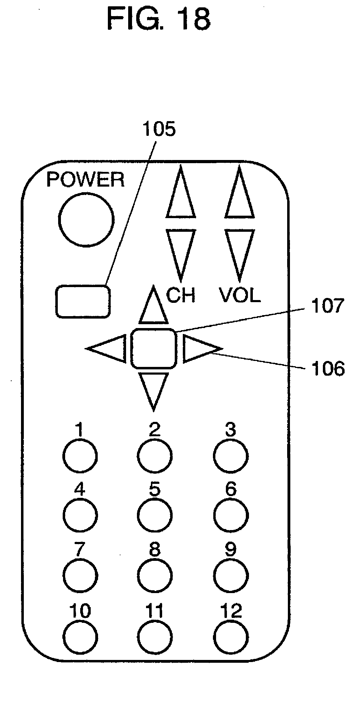

FIG. 17 shows a TV screen displaying conventional recording recommending program table 101, which is a list of recommendations for programs for recording. In addition, FIG. 18 shows a remote control for operating the list of recommendations. Recording recommending program table 101 in FIG. 17 is a table formed of axis of degree of recommendation 102 along which programs for recording are shown in order from the highest degree of recommendation at the top to the lowest degree of recommendation at the bottom, and axis of time for recording 103 along which the time for recorded programs is shown. In addition, the remote control in FIG. 18 is an operation terminal having recording recommending program table button 105 for displaying recording recommending program table 101, selection button 106 for moving program selection cursor 104 which highlights parts of the program table, and determination button 107 for determining the program to be viewed.

The user presses recording program table button 105 on the remote control, and thus, recording recommending program table 101 is displayed. Then, the user presses selection button 106 in the case where there is a program they desire to view among the programs for recording, so that program selection cursor 104 is adjusted to a point where the program the user wishes to view is displayed. In the case where the program to which program selection cursor 104 is adjusted is viewed, the user presses determination button 107 and views the recommended program. In this configuration, while a recommended program can be selected in the list of recommendations and viewed, the operation for selecting a recommended program by moving the selection cursor in the list of recommendations displayed on the screen is complicated.

There is the following problem with the prior art shown in Unexamined Japanese Patent Publication No.2002-112186.

In accordance with the method for informing the user of recommended programs through the conventional program recommending function, a list of recommendations is displayed on the screen, and the selection cursor is moved in the displayed list of recommendations, so that a recommended program is selected. That is to say, a number of operations are required in the operation terminal in order to view a recommended program. Furthermore, as television broadcast reception devices have progressed, the number of functions has increased, making operation using the operation terminal complicated, and therefore, there is a problem, such that the user cannot smoothly operate the operation terminal. In addition, the list of recommendations is displayed on the screen, and therefore, the user cannot be informed of recommended programs while viewing TV images.

WO2005004077 discloses a system and method for facilitation and encouragement of user interaction and functionality with a multimedia program via an entertainment system and remote control device. The entertainment system and remote control device are in two-way communication to accomplish the various interactivity functions and features of the invention. The remote control includes one or more selectively illuminated buttons under the control of the entertainment system, such that when the entertainment system displays a prompt to the user requiring a response, the entertainment system may send a signal to the remote control selectively illuminating the button(s) to indicate to the user that the button(s) may be operated to make a response to the prompt.

### DISCLOSURE OF THE INVENTION

The present invention solves the above described problems with the prior art, and provides a television system according to claim 1 made up of a television broadcast reception device and an operation terminal, which makes programs to the user's taste easy to view.

The television system according to the present invention allows the television broadcast reception device to transmit information on the user's taste for programs to the user's taste to the operation terminal, outputs the information that a program to the user's taste exists in the operation terminal so that the user can select a program they like, and transmits the selected program information to the television broadcast reception device. As a result, it can be seen on the operation terminal that there is a program to the user's taste, and thus, it becomes possible to view a program to the user's taste with a simple operation.

In addition, in the television system according to the present invention, in the case where the operation terminal receives a number of pieces of information to the user's taste from the television broadcast reception device, the respective pieces of information showing that programs to the user's taste exist are outputted in different formats when information showing that programs to the user's taste exist is outputted. As a result, when information showing that a number of programs to the user's taste exist is outputted, the user can easily see the difference between the number of outputted programs to the user's taste.

In addition, the television system according to the present invention has a determination part for determining the degree of the user's taste for programs, and outputs information showing that programs to the user's taste exist in different formats based on the determined degree of the user's taste for programs. As a result, when the degree of the user's taste for programs is determined, this can be used to detect programs to the user's taste, and in addition, when the degree of the user's taste for programs is used, the order for recommending the programs to the user can be set.

In addition, the operation terminal of the television system according to the present invention has numbers corresponding to respective channels of television broadcasts, and information on the user's taste for detected programs is allocated to numbers corresponding to the respective channels. As a result, the user can see which channel on the operation terminal is for the recommended program.

In addition, the television system according to the present invention has a location change detecting part for detecting if the location of the operation terminal has changed, so as to detect programs to the user's taste and output information showing that a program to the user's taste exists when a change in the location of the operation terminal is detected. As a result, programs to the user's taste can be recommended to the user with appropriate timing.

In addition, the television system according to the present invention detects programs to the user's taste when the power of the television broadcasting apparatus is turned on, and outputs information showing that programs to the user's taste exists. As a result, programs to the user's taste can be recommended to the user with appropriate timing.

In addition, the television system according to the present invention outputs information showing that programs to the user's taste exist, and stops outputting information showing that programs to the user's taste exist a program to the user's taste is selected. As a result, a situation where the information showing that programs the user's taste exist continues being outputted can be avoided, and the power consumed by the operation terminal can be reduced by stopping output.

In addition, the television system according to the present invention outputs information showing the programs to the user's taste exist, and then stops outputting information showing the programs to the user's taste exist in the case where no program to the user's taste is selected after a predetermined period of time or more has elapsed. As a result, a situation where the information showing that programs the user's taste exist continues being outputted can be avoided, and the power consumed by the operation terminal can be reduced by stopping output.

In addition, the television system according to the present invention determines whether or not the detected program to the user's taste and the program the user is viewing are the same, and in the case where the program to the user's taste and the program the user is viewing are the same, the information on the user's taste for the detected program is not transmitted to the operation terminal. As a result, the television broadcast reception device does not transmit the information on the user's taste to the operation terminal, and thus, the power consumed by the television broadcast reception device can be reduced. Furthermore, the operation terminal does not receive the information on the user's taste or output information showing that programs to the user's taste exist, and therefore, the power consumed by the operation terminal can also be reduced.

In addition, the television system according to the present invention has a user identifying part for identifying the user, and detects programs to the user's taste based on the information on the identified user's taste when the user is identified by the user identifying part, and outputs information showing that detected programs to the user's taste exist. As a result, programs to different users' tastes can be recommended, even in the case where the television is shared by a number of users.

The television system according to the present invention allows the television broadcast reception device and the operation terminal to communicate, making it possible for programs to the user's taste to be seen on the operation terminal, and thus, a program to the user's taste can be easily selected.

### BRIEF DESCRIPTION OF THE DRAWINGS

FIG. 1 is a diagram showing the configuration of the television system according to the first embodiment of the present invention.
FIG. 2 is a flow chart showing the operation for recommending programs in the television system according to the first embodiment of the present invention.
FIG. 3 is a flow chart showing the operation for selecting programs in the television system according to the first embodiment of the present invention.
FIG. 4 is a diagram showing the configuration of the operation terminal in the television system according to the third embodiment of the present invention.
FIG. 5 is a diagram illustrating the operation for light emission of the number buttons on the operation terminal in the television system according to the third embodiment of the present invention.
FIG. 6 is a diagram illustrating how the channel buttons respond when the number of channels received by the television system according to the third embodiment of the present invention is great.
FIG. 7 is a table showing the relationship between channels and numbers in the television system according to the first embodiment of the present invention.
FIG. 8 is a table showing the relationship between channels and numbers in a direct tuning mode in the television system according to the third embodiment of the present invention.
FIG. 9 is a table showing the results of matching between elements of information on the user's taste and program information in the television system according to the second embodiment of the present invention.
FIG. 10 is a diagram showing the relationship between channels and preset numbers in a direct tuning mode.
FIG. 11 is a diagram showing the configuration of the television system according to the second embodiment of the present invention.
FIG. 12 is a diagram showing the configuration of the television system according to the fourth embodiment of the present invention.
FIG. 13 is a diagram showing the configuration of the television system according to the sixth embodiment of the present invention.
FIG. 14 is a diagram showing the configuration of the television system according to the seventh embodiment of the present invention.
FIG. 15 is a diagram showing an example of the display of number buttons according to the present invention.
FIG. 16 is a diagram showing a configuration for implementing the display shown in FIG. 15.
FIG. 17 is a diagram showing a TV screen displaying a list of recommendations through a conventional program recommending function.
FIG. 18 is a diagram showing a remote control for operating a list of recommendations through a conventional program recommending function.

### EXPLANATION OF SYMBOLS

- 1: television system
- 2: television broadcast reception device
- 3: operation terminal
- 4: antenna part
- 5: broadcast receiving part
- 6: separation part
- 7: decoding part
- 8: program outputting part
- 9: program recommendation controlling part
- 10: detection part
- 11: data transmitting and receiving part
- 12: program information storing part
- 13: input part
- 14: channel table
- 15: information on user's taste storing part
- 16: time measuring part
- 17: operation terminal controlling part
- 18: information on user's taste receiving part
- 19: transmission part
- 20: output part
- 21: selection part
- 22: number buttons
- 23: light source
- 24: operation terminal
- 101: recording recommending program table
- 102: axis of degree of recommendation
- 103: axis of time for recording
- 104: program selection cursor
- 105: recording program table button
- 106: selection button
- 107: determination button

### DETAILED DESCRIPTION OF THE PREFERRED EMBODIMENTS

In the following, the best mode for carrying out the invention is described with reference to the drawings.

### (First Embodiment)

In the following, the first embodiment is described with reference to the drawings.

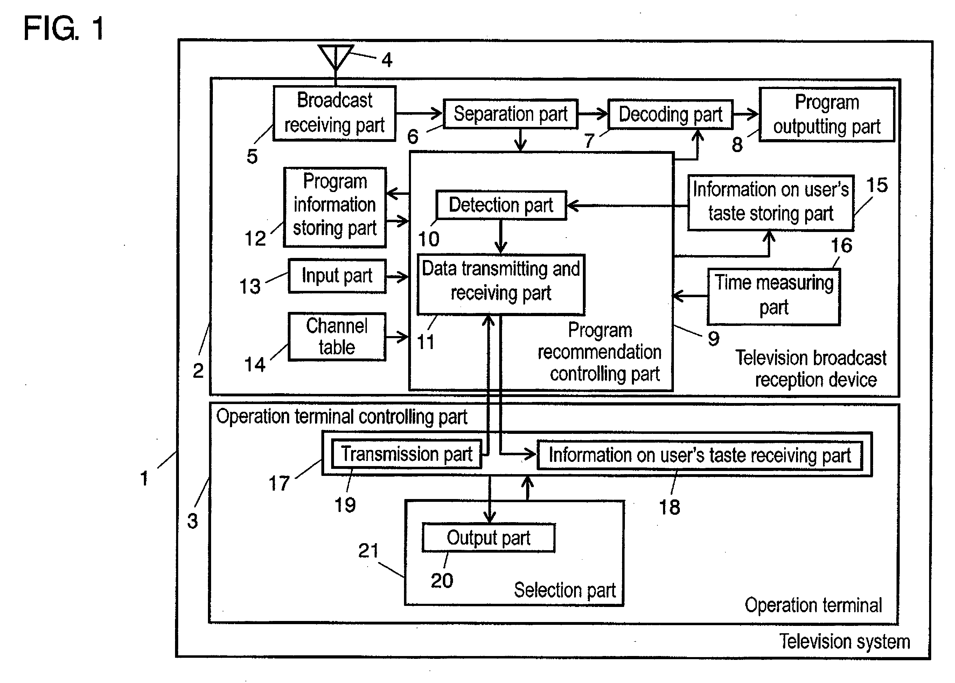

FIG. 1 is a block diagram showing the configuration of television system 1 according to the first embodiment of the present invention. Television system 1 shown in FIG. 1 is formed of television broadcast reception device 2 and operation terminal 3. In addition, television broadcast reception device 2 is formed of antenna part 4, broadcast receiving part 5, separation part 6, decoding part 7, program outputting part 8, program recommendation controlling part 9, detection part 10, data transmitting and receiving part 11, program information storing part 12, input part 13, channel table 14, information on user's taste storing part 15 and time measuring part 16. Operation terminal 3 is formed of operation terminal controlling part 17, information on user's taste receiving part 18, transmission part 19, output part 20 and selection part 21.

First, television broadcast reception device 2 is described. Digital television broadcasts received by antenna part 4 are inputted into broadcast receiving part 5. Then, the channel desired by the user where the broadcast signal is modulated is selected through control by the below described program recommendation controlling part 9.

The modulated signal outputted by broadcast receiving part 5 is inputted into separation part 6, which extracts program information (information relating to programs, such as EPG information) from demodulated MPEG-2 transport stream. This program information is stored in the below described program information storing part 12. In addition, it is well known in digital television broadcasting that MPEG-2 transport stream is modulated for broadcast.

The MPEG-2 transport stream outputted by separation part 6 is inputted into decoding part 7, which extracts and decodes the streams of image and speech sound of the program desired by the user through control of program recommendation controlling part 9, and after that, outputs image signals of analog Y/Pb/Pr and speech sound signals of analog L/R.

The image signals of analog Y/Pb/Pr from decoding part 7 are inputted into program outputting part 8, which amplifies these image signals. In addition, program outputting part 8 extracts a synchronization signal which is multiplexed with the analog Y signal, and after that, outputs an image signal which is amplified in sync with this synchronization system to a monitor, not shown. Furthermore, speech sound signals of analog L/R are inputted into program outputting part 8, which amplifies these speech sound signals and outputs the resulting signal to speakers, not shown.

Program recommendation controlling part 9 has a detection part 10 and a data transmitting and receiving part 11, and is a microcomputer for controlling the components of television broadcast reception device 2. In addition, program recommendation controlling part 9 is connected to the below described program information storing part 12 in such a manner that write-in into information on user's taste storing part 15 is possible. Furthermore, program recommendation controlling part 9 stores program information outputted by separation part 6 in program information storing part 12. Input part 13 is an interface for accepting the operation for inputting information on the user's taste and the like. Here, information on the user's taste refers to program titles, genre, time when programs start, time when programs finish and keywords for programs, and includes also items set as emergency information. Here, emergency information refers to broadcast program information in the case where urgent special news on a disaster is broadcast. In addition, the emergency information may be set by the user through input part 13 or set in advance by the manufacturer at the stage where the television is manufactured. It is possible to use a remote control, a keyboard or the like as input part 13. Here, the below describe operation terminal 3 may function as input part 13, or input part 13 may be implemented using the below described terminal which is different from operation terminal 3. Operation by the user, such as input of information on the user's taste or changing of the channel, is converted to an electrical signal by input part 13 so as to be inputted into program recommendation controlling part 9 and then stored in information on user's taste storing part 15.

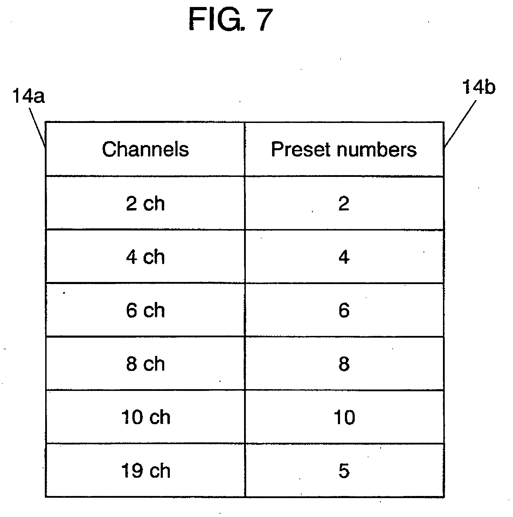

Channel table 14 stores the relationship between the respective channels of the broadcasts received by television broadcast reception device 2 and the values (preset numbers) for selecting programs used in television broadcast reception device 2 and operation terminal 3 in a memory, and is used for presetting channels in such a manner that the channels and the present numbers correspond to each other. In addition, this relationship can be changed by the user. Here, an example of channel table 14 is described with reference to FIG. 7. FIG. 7 is a table showing the relationship between broadcast channels 14a received by television broadcast reception device 2 and preset numbers 14b for selecting programs used in television broadcast reception device 2 and operation terminal 3. The present number which corresponds to channel 2ch received by television broadcast reception device 2 is 2, the preset number which corresponds to channel 4ch is 4, the preset number which corresponds to channel 6ch is 6, the preset number which corresponds to channel 8ch is 8, the preset number which corresponds to channel 10ch is 10, and the preset number which corresponds to channel 19ch is 5.

Time information is inputted into detection part 10 through time measuring part 16. Thus, detection part 10 uses information on the user's taste that has been inputted in information on user's taste storing part 15 and detects a program to the user's taste which is desired by the user from among the group of programs at the time when viewed by the user in the information on the programs inputted into program information storing part 12. Program recommendation controlling part 9 transmits information on the user's taste of the detected programs to the user's taste to date transmitting and receiving part 11. Information on the user's taste refers to programs to the user's taste, channels for emergency programs, values corresponding to the channels for identifying the program when a program is selected using operation terminal 3 and the like.

Data transmitting and receiving part 11 receives information on the user's taste from detection part 10, makes transmission and reception of data to and from operation terminal 3 possible, and transmits information on the user's taste that has been transmitted to data transmitting and receiving part 11 from detection part 10 to information on user's taste receiving part 18 in operation terminal 3. In addition, data transmitting and receiving part 11 receives the below described selected program information gained when the user selects a program through operation, from operation terminal controlling part 17 of the below described operation terminal 3. The received selected program information is controlled by program recommendation controlling part 9. Program recommendation controlling part 9 detects the channel corresponding to the selected program information received by operation terminal 3 from channel table 14, and allows decoding part 7 to decode the program on the detected channel as a program desired by the user. In addition, the selected program is a program desired by the user, and therefore, program information on the selected program is stored as information on the user's taste. Thus, program recommendation controlling part 9 reads in the program information corresponding to the program selected from program information storing part 12 and stores the program information in information on user's taste storing part 15.

Next, the configuration of operation terminal 3 is described. Operation terminal controlling part 17 is a microcomputer which has information on user's taste receiving part 18 and controls the components of operation terminal 3. Information on user's taste receiving part 18 receives information on the user's taste from data transmitting and receiving part 11. In addition, operation terminal controlling part 17 outputs information on the user's taste to output portion 20, receives the below described selected program information from selection part 21, and allows transmission part 19 to transmit the selected program information to data transmitting and receiving part 11. Selection part 21 has output part 20 for outputting information showing that programs to the owner's taste exist and a program selection button, not shown, which, when pressed, allows for selection of a program. Selection part 21 is an interface for accepting the operation for selecting a program by the user, and is controlled by operation terminal controlling part 17.

This information showing that programs to the user's taste exist is information for making the user see that programs to the user's taste exist, and refers to information that is provided based on the information on the user's taste received by operation terminal controlling part 17 or the information on the user's taste. Operation for selecting a program by the user is converted to an electrical signal by selection part 21 and transmitted to data transmitting and receiving part 11 from transmission part 19 as selected program information. According to the present embodiment, output part 20 makes a program selection button for viewing the program corresponding to the program to the user's taste emit light based on the information on the user's taste received by operation terminal controlling part 17. That is to say, output part 20 prepares and outputs information showing programs to the user's taste exist based on the information on the user's taste. Here, information showing that programs to the user's taste exist refers to an electrical signal indicating whether or not the program selection button is made to emit light, and in the case where there are a number of program selection buttons, an electrical signal including information on which program selection button is made to emit light.

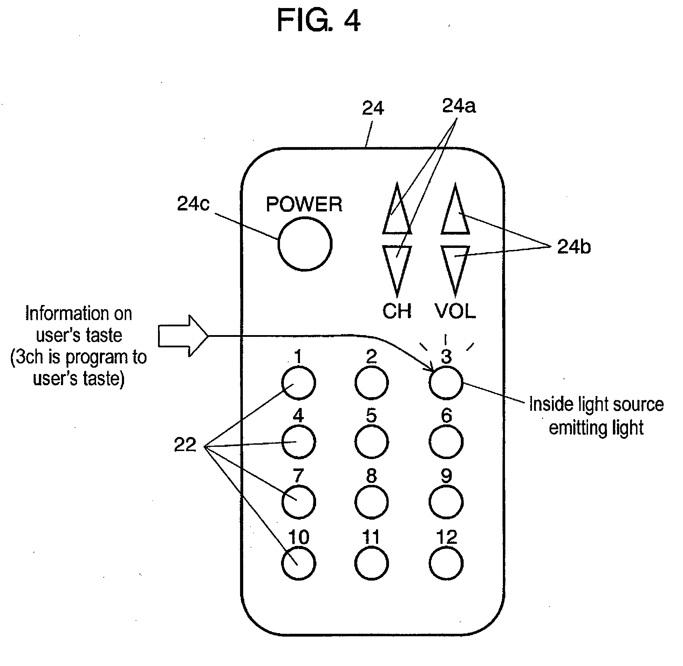

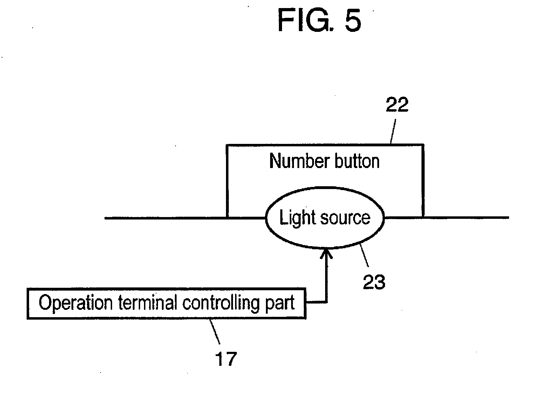

Here, operation terminal 3 is formed so as to have numbers corresponding to respective channels of television broadcasts received by broadcast receiving part 5, and allocates the information on the user's taste of programs to the user's taste detected by detection part 10 to numbers corresponding to the respective channels. FIG. 4 shows a concrete configuration for operation terminal 3; that is, operation terminal 24. In addition, FIG. 5 is a diagram showing the configuration and illustrating the operation of the below described number buttons for emitting light on operation terminal 24 shown in FIG. 4.

FIG. 4 shows operation terminal 24. Operation terminal 24 has POWER button 24c for turning on and off the power source, CH button 24a for sequentially selecting the channel, VOL button 24b for changing the volume, and number buttons 22 from "1" to "12" with which the channel can be directly selected. In addition, FIG. 5 shows number button 22. Number button 22 has light source 23 inside, and light source 23 is controlled by operation terminal controlling part 17 shown in FIG. 1. Then, light is emitted, when the program corresponding to number button 22 is recommended. In FIGS. 4 and 5, number buttons 22 are selection part 21 of FIG. 1, and light source 23 is output part 20 of FIG. 1. In addition, number buttons 22 can also be a program selection button, not shown in FIG. 1.

When operation terminal 24 receives the information on the user's taste, operation terminal controlling part 17 allocates the information on the user's taste to number button 22 corresponding to the recommended program and instructs the light source inside number button 22 to emit light. When channel 3ch, for example, is preset to number button 22 "3," operation terminal controlling part 17 makes light source 23 inside number button 22 "3" emit light, in the case where the information on the user's taste relates to the program of 3ch, as shown in FIG. 4.

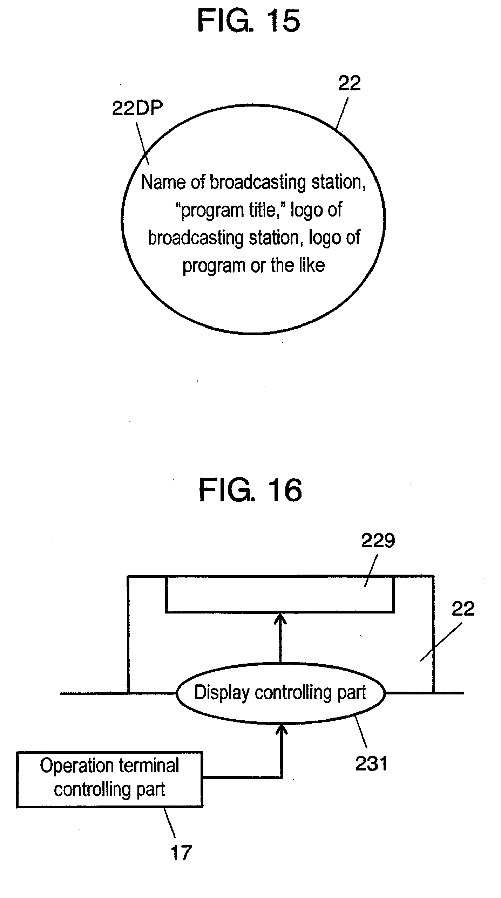

Here, though a system for illuminating number buttons 22 with light from light source 23 is shown in FIG. 5, the present invention is not limited to this system. Another method according to the present invention is described with reference to FIGS. 15 and 16.

In FIGS. 15 and 16, number button 22 is equipped with display part 229. Display controlling part 231 is controlled by operation terminal controlling part 17. Display controlling part 231 controls the contents of display on display part 229 following the instruction from operation terminal controlling part 17. Display part 229 reflects display 22DP, for example the name of the broadcasting station, the broadcast program title, the logo of the broadcasting station or the logo of the program, through the control by display controlling part 231.

Here, this display system is not limited to the first embodiment, and can be applied to all embodiments of the present invention.

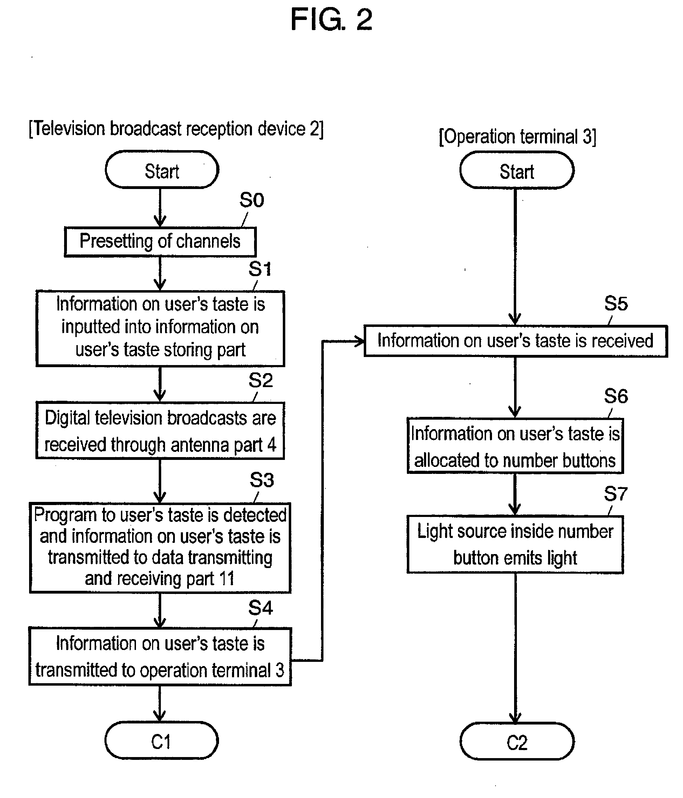

Next, the operation of television system 1 of the present invention is described. FIG. 2 is a flow chart showing the operation for recommending programs in television system 1 according to the present invention. The operation for recommending programs is described with reference to this FIG. 2.

Using channel table 14, program recommendation controlling part 9 presets the channels so that the broadcast channels received by television broadcast reception device 2 and the preset numbers for selecting a program used in television broadcast reception device 2 and operation terminal 3 correspond to each other (Step S0). The user inputs information on the user's taste through input part 13, and program recommendation controlling part 9 allows the inputted information on the user's taste to be stored in information on user's taste storing part 15 (Step S1).

Television broadcast reception device 2 receives digital television broadcasts through antenna part 4 (Step S2). The time when the user is viewing a program is calculated by time measuring part 16. Detection part 10 uses the program information acquired from broadcasts received in Step S2 and the information on the user's taste inputted from information on user's taste storing part 15 to detect a program to the user's taste from among the programs being broadcast at that time and transmit the information on the user's taste of the above described program to the user's taste that is required to select the program to the user's taste to data transmitting and receiving part 11. In addition, program recommendation controlling part 9 allows the program information to be stored in program information storing part 12 (Step S3).

Program recommendation controlling part 9 allows the information on the user's taste to be transmitted to operation terminal 3 from data transmitting and receiving part 11 (Step S4). The information on the user's taste that is transmitted from data transmitting and receiving part 11 in television broadcast reception device 2 in Step S4 is received by information on user's taste receiving part 18 in operation terminal controlling part 17 (Step S5). Operation terminal controlling part 17 allocates the information on the user's taste to number buttons 22 corresponding to the channels of the programs corresponding to the information on the user's taste received in Step S5 (Step S6). Operation terminal controlling part 17 makes light source 23 within number button 22 to which the information on the user's taste is allocated emit light. Here, the method for making light source '23 emit light is merely one display method for operation terminal 3, and other methods may be used, as long as output part 20 can show that programs to the user's taste exist in a manner that the user can recognize (Step S7).

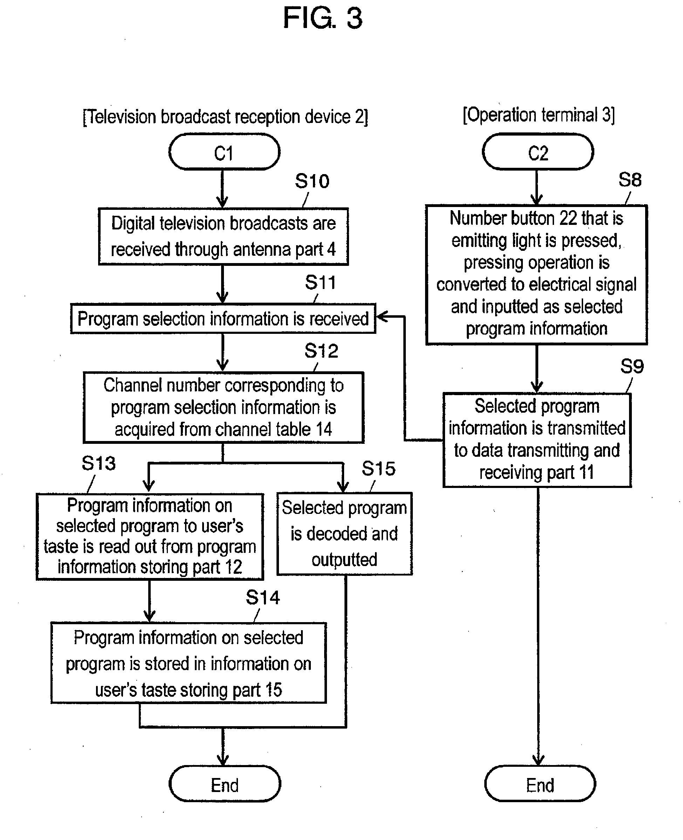

The operation for recommending programs in television broadcast reception device 2 and operation terminal 3 is described above, and in the case where the user views the recommended program, television system 1 carries out the below described operation for selecting programs (C 1 and C2). At this time, C1 and C2 in FIG. 2 correspond to C1 and C2 in FIG. 3, respectively. In addition, it is not necessary to preset the channels in Step S0 and input the information on the user's taste in Step S1 every time the above described operation for recommending programs is carried out, but it is possible to freely change these.

FIG. 3 is a flow chart showing the operation for selecting programs in television system 1 according to the present invention. The operation for selecting programs is described with reference to this FIG. 3.

Television broadcast reception device 2 allows broadcast receiving part 5 to receive digital television broadcasts through antenna part 4 (Step S10). Meanwhile, the user selects a desired program through selection part 21 on operation terminal 3, into which selected program information converted to an electrical signal is inputted. This means that number button 22 having light source 23 which emits light outputting information showing that recommended programs to the user's taste exist inside is pressed, so that the operation for pressing number button 22 converts the selected program information to an electrical signal, which is then inputted (Step S8). The selected program information that has been converted to an electrical signal and inputted in Step S8 is controlled by operation terminal controlling part 17 and transmitted to data transmitting and receiving part 11 in television broadcast reception device 2 (Step S9).

The selected program information transmitted in Step S9 is received by data transmitting and receiving part 11 (Step S11). Program recommendation controlling part 9 acquires the channel corresponding to the selected program information received from channel table 14 in Step S11. From here, the procedure branches to Step 13, in which the program information on the selected program is stored as information on the user's taste, and Step 15, in which the selected program is decoded (Step S12). Program recommendation controlling part 9 reads out the program information on the program being broadcast on the channel gained in Step S12 at the time from program information storing part 13 (Step S13). The program recommendation controlling part stores the program information that is read out in Step S13 in information on user's taste storing part 15 as information on the user's taste (Step S14). Meanwhile, the program gained in Step S12 is decoded in decoding part 7 and outputted by program outputting part 8 (Step S15).

As described above, television system 1 according to the present first embodiment transmits information on the user's taste of the program to the user's taste to operation terminal 3 from television broadcast reception device 2 and outputs information showing that programs to the user's taste exist to operation terminal 3, so that the user can select a program to the user's taste and the selected program information is transmitted to television broadcast reception device 2, and thus, the user can view a desired program. As described above, two-directional communication between television broadcast reception device 2 and operation terminal 3 is possible, so that television broadcast reception device 2 can transmit information on the user's taste to operation terminal 3, and operation terminal 3 can transmit selected program information to television broadcast reception device 2, and thus, it becomes possible to see programs to the user's taste on operation terminal 3, and it becomes possible to view a program to the user's taste with a simple operation.

In addition, unlike the prior art, the television system according to the first embodiment is not so complicated that a list of recommendations is displayed on the screen, from which a program is selected, and thus, no complicated operation on the operation terminal is required. Therefore, the user can smoothly operate the operation terminal and it is not necessary to select a program to the user's taste on the screen, and therefore, it can be easily known by looking at the operation terminal that a program to the user's taste is being broadcast, so that the program can be selected. In addition, according to the prior art, a list of recommendations is displayed on the screen so that a recommended program can be selected, and therefore, it is difficult to view broadcast images on the television while the list of recommendations is displayed. According to the present invention, however, information showing that programs to the user's taste exist is outputted to the operation terminal, and thus, no list of recommendations or the like is displayed on the television screen, and therefore, the user can be informed that recommended programs to the user's taste exist while viewing broadcast images on the television. Furthermore, according to the present invention, the television system automatically outputs and displays information showing that programs to the user's taste exist for the user, and in addition, the information showing that programs to the user's taste exist is outputted to the operation terminal, and therefore, the user is not prevented from viewing the television.

In addition, the information on the user's taste on the programs to the user's taste is allocated to numbers (number buttons) corresponding to the respective channels on operation terminal 24, and thus, pieces of information on the user's taste and portions of selection part 21 correspond one-to-one on operation terminal 24, so that conventionally used buttons for selecting programs which are not recommended programs can be used as selection part 21 for recommended programs. Therefore, in order to view a recommended program to the user's taste, a program to the user's taste can be selected through one-time operation for selecting a program; that is, by pressing a number button, in the same manner as for conventional selection of a program by pressing a number button once.

This corresponds to conventional methods for recommending a program according to which the user displays a list of recommendations on the screen in the case where there are recommended programs, and the user sees which programs are recommended programs on the screen, and after that, moves the selection cursor in the list of recommendation for selection, in order to select a program to be viewed, and then, views a recommended program. Therefore, a number of complicated operations are necessary. In contrast, according to the present embodiment, light source 23 within number button 22, which is the output part, emits light in the case where there is a recommended program, and thus, information showing that programs to the user's taste exist is automatically outputted to operation terminal 3, and the user can see which channel is for a recommended program on operation terminal 3 and presses the number button that is emitting light, and thus, a recommended program can be viewed. That is to say, the required operation is simple pressing down of the number button emitting light, and therefore, there is no operation for displaying a list of recommendations on the screen or selecting a program from the list of recommendations. Furthermore, in the configuration where number buttons 22 emit light, output part 20, selection part 21 and buttons for conventionally selecting programs are integrated, and therefore, a program to the user's taste can be selected through on-time operation for selecting a program, in the same manner as in the operation for conventionally selecting a program by pressing a number button which is emitting light.

### (Second Embodiment)

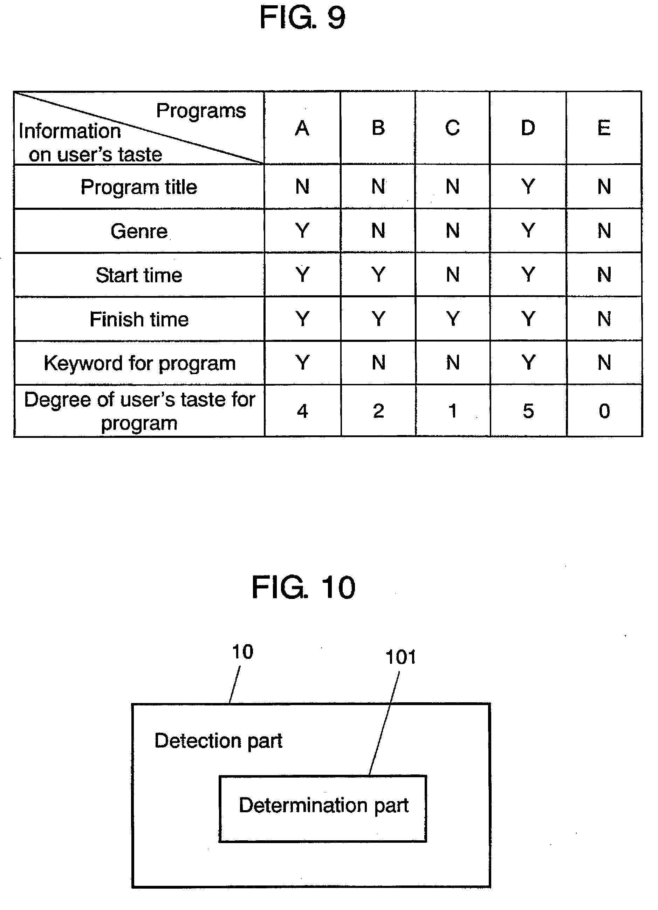

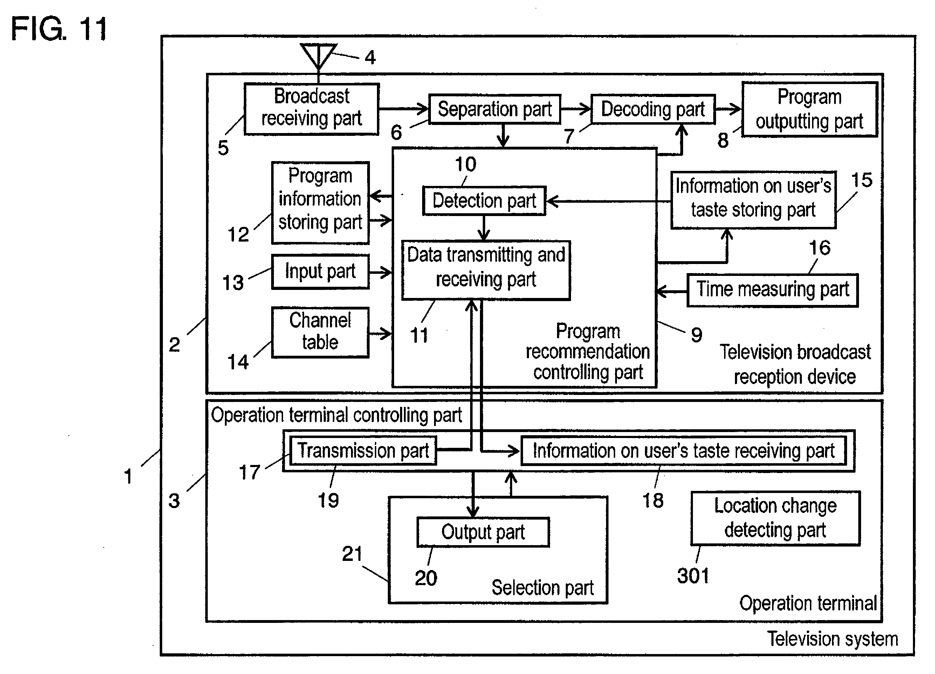

Next, the second embodiment of the present invention is described with reference to FIGS. 10 and 11. In this second embodiment, as shown in FIG. 10, television system 1 is further provided with determination part 101 for determining the degree of the user's taste for different programs in the configuration of television system 1 of the first embodiment, in the case where a number of programs to the user's taste are recommended. Detection part 10 detects a number of programs to the user's taste, information on the user's taste received by data transmitting and receiving part 11 is information on the user's taste for a number of programs to the user's taste, operation terminal 3 receives information on the user's taste for a number of programs to the user's taste, and output part 20 outputs information showing that a number of programs to the user's taste exist based on the received information on the user's taste, so that information showing the respective programs to the user's taste exist is in different formats.

As shown in FIG. 11, the second embodiment is provided with determination part 101 within detection part 10 in television broadcast reception device 2 of FIG. 1. In addition, determination part 101 is controlled by program recommendation controlling part 9. Here, descriptions of parts in the configuration which are the same as those in the first embodiment are omitted. Here, output of information showing that different programs exist in different formats means that there are a number of program selection buttons which are the same as that described in the first embodiment, and when the program selection buttons emit visual light for output of the information, the color of light emitted from the program selection buttons varies, so that light emitted from the program selection buttons has variation. In the second embodiment, information showing that programs to the user's taste exist refers to an electrical signal indicating which program selection buttons emit light in what manner.

Here, variation in the color of emitted light means variation in the color of emitted light in accordance with the degree of the user's taste for programs, use of gradation by intensifying and weakening the emitted colored light, or emission of light having a special color, in the case where the information on the user's taste for the recommended programs is urgent information. In addition, in the case where a number of programs to the user's taste are recommended in operation terminal 24, a number of channels are recommended, and therefore, operation terminal controlling part 17 allocates information on the user's taste to the number buttons corresponding to the channels of the respective programs that are recommended. Thus, operation terminal controlling part 17 allows the light sources inside the respective number buttons to emit different light in accordance with the degree of the user's taste for the programs.

Next, the operation of determination part 101 for determining the degree of the user's taste for programs is described. Detection part 10 detects programs to the user's taste based on program information at the time and information on the user's taste. Here, as an example of the operation of determination part 101, a case can be cited where the method for determining the degree of the user's taste for programs in the determination part is a determination method through matching between respective elements of information on the user's taste and the program information. At this time, information on the user's taste is made up of five elements: program title, genre, start time, finish time and keywords for programs. In addition, program information on the respective programs is also made up of five elements: program title, genre, start time, finish time and keywords for programs. In addition, in determining the user's taste, elements are matched between information on the user's taste and information on the user's taste for different programs. In addition, in the second embodiment, the number of elements where the values coincide as a result of matching between the program information on different programs and the information on the user's taste is regarded as the degree of the user's taste for programs.

FIG. 9 shows the results of matching for different programs. FIG. 9 is a matrix diagram with programs in the lateral direction and information on the user's taste in the longitudinal direction. "Y" in FIG. 9 indicates that the value of the element of information on the user's taste and the value of the element of program information are the same, and "N" indicates that they are not the same. As shown in FIG. 9, the degree of the user's taste for program A is 4, the degree of the user's taste for program B is 2, the degree of the user's taste for program C is 1, the degree of the user's taste for program D is 5, and the degree of the user's taste for program E is 0.

In addition, it is assumed that detection part 10 detects programs to the user's taste using the degree of the user's taste for programs. According to this method, detection part 10 uses a predetermined threshold value to detect programs having the threshold value or higher as a program to the user's taste. Here, in the case where the threshold value is 3, program A of which the degree of the user's taste for the program is "4" and program D of which the degree of the user's taste for the program is "5" are detected as programs to the user's taste, from among programs A to E in FIG. 9. In addition, the degree of the user's taste for the detected programs to the user's taste may also be used as one piece of information on the user's taste when output part 20 shows that programs to the user's taste exist. In this example, a number of programs to the user's taste are detected, and therefore, output part 20 must have different expressions to show that programs to the user's taste exist when showing that a number of programs to the user's taste exist. At this time, it is shown that programs to the user's taste exist using the degree of the user's taste for programs. In the case where the method for showing that programs to the user's taste exist is to make output part 20 emit light, it is possible for operation terminal controlling part 17 to intensify or weaken the emitted colored light through gradation in accordance with the degree of the user's taste for programs, or to emit red, yellow and blue light in the order of the degree of the user's taste, from highest to lowest.

As described above, the television system according to the second embodiment is provided with determination part 101 for determining the degree of the user's taste for programs, and the output of output part 20 is different for different programs to the user's taste in the case where a number of programs to the user's taste are detected. In this manner, the degree of the user's taste for different programs is determined, and this is used for the detection of programs to the user's taste. In addition, the recommendations to the user can be ordered using the degree of the user's taste for programs, and therefore, operation terminal 3 outputs information showing that a number of programs to the user's taste exist. Thus, the output has different formats using the above described order for recommendation, in order to show that different programs to the user's taste exist, and the user can easily see the difference between the number of outputted programs to the user's taste. Here, use of determination part 101 for determining the degree of the user's taste for programs is not limited to when a number of programs to the user's taste are recommended, and it is possible to use determination part 101 when one program to the user's taste is recommended.

### (Third Embodiment)

In the configuration of operation terminal 24, as shown in FIGS. 4 and 5, in television system 1 according to the first and second embodiments, it is in some cases difficult to select a program. In the case where the number of channels is great, as with cable television, for example, the number of number buttons on operation terminal 3 for selecting a program is limited. Accordingly, the number of buttons is not sufficient, and in some cases, it is impossible to make one-to-one correspondence between buttons and channels. Therefore, in the third embodiment of the present invention, the manner in which correspondence is made between number buttons and channels on the operation terminal is shown, in the case where the number of broadcast channels is greater than that of the number buttons for the operation of selecting a program as described above.

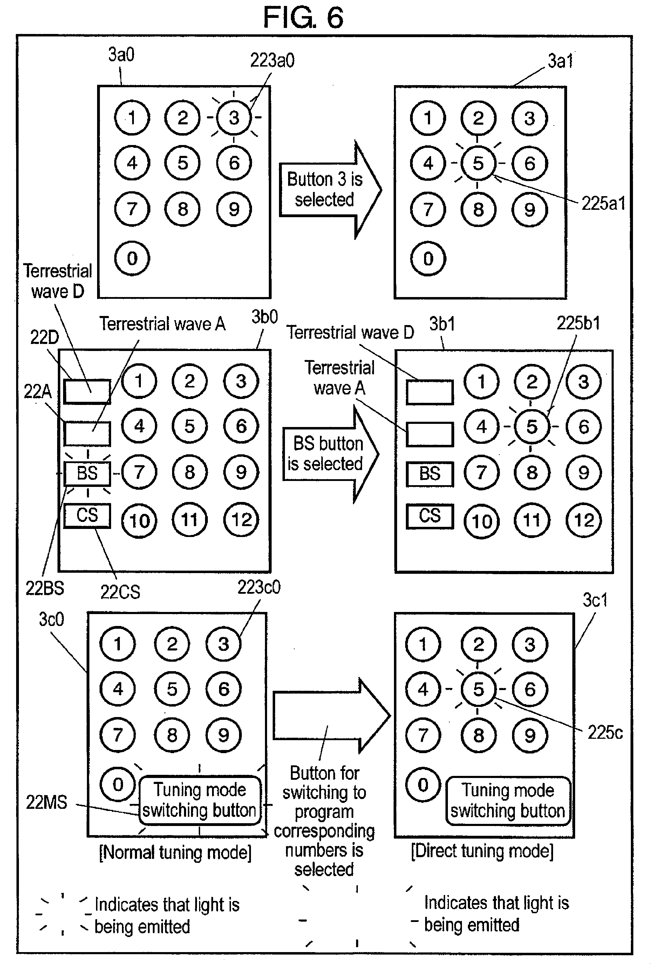

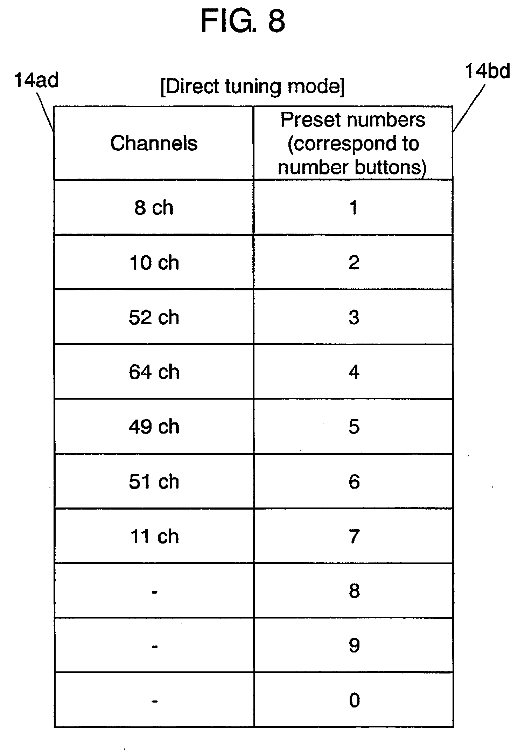

The third embodiment is described in accordance with FIGS. 6 and 8. Here, descriptions for parts of the configuration which are the same as in the first and second embodiments are omitted.

Remote controls (operation terminal) for cable television have number buttons for selecting a program in ten-key form, and when a channel is selected, a numeral value is inputted for each digit of the number of a channel, by pressing ten keys. When the program of channel 35ch is desired to be viewed, for example, the user presses number button 223a0 "3," so that the digit of tens is determined, and subsequently presses number button 225a "5," so that the digit of ones is determined. The following is possible as a method for outputting information showing that programs to the user's taste exist in the third embodiment using an operation terminal as that described above. Appearance of remote control 3a0 and appearance of remote control 3a1 in FIG. 6, for example, show that channel 35ch is a program to the user's taste when information to the user's taste received by the operation terminal is information on the user's taste for channel 35ch.

Appearance of remote control 3a0 and appearance of remote control 3a1 in FIG. 6 show number buttons "0" to "9" used for selecting programs, and the respective number buttons are formed so as to emit light when operation terminal controlling part 17 allocates information on the user's taste to the respective number buttons. First, number button 223a0 "3" emits light, and number button 223a0 "3," which is emitting light, is selected by the user, and then, number button 225a1 "5" emits light. Then, when number button 225a1 "5" is selected, the program being viewed is switched to channel 35ch. This is a method for outputting information showing that a program to the user's taste exists in the case of multiple channels, for example with cable television according to which number buttons emit light in sequence, letting the user know how to navigate.

In addition, this method can be used in the case of a multi-tuner which can receive terrestrial wave digital broadcasts, terrestrial wave analog broadcasts, BS broadcasts and CS broadcasts. Appearance of remote control 3b1 and appearance of remote control 3b2 in FIG. 6 show the operation of operation terminal 3 at this time. Appearance of remote control 3b0 and appearance of remote control 3b1 in FIG. 6 show terrestrial wave A button 22TA, terrestrial wave D button 22TD, BS button 22BS and CS button 22CS for switching the type of broadcast waves, and number buttons "1" to "12" for selecting the channel of each type of broadcast wave. Terrestrial wave A button 22TA is a button for terrestrial wave analog broadcast, terrestrial wave D button 22TD is a button for terrestrial wave digital broadcast, BS button 22BS is a button for BS broadcast, and CS button 22CS is a button for CS broadcast. In addition, terrestrial wave A button 22TA, terrestrial wave D button 22TD, BS button 22BS, CS button 22CS and number buttons "1" to "12" are formed so as to emit light when operation terminal controlling part 17 allocates information on the user's taste. A case is assumed where, for example, when a terrestrial wave digital broadcast is being viewed, channel 5ch of BS broadcast is recommended as a program to the user's taste. First, BS button 22BS emits light (see appearance of remote control 3b0 in FIG. 6), and BS button 22BS, which is emitting light, is selected by the user, and then, number button 225b1 "5" emits light (see appearance of remote control 3b1 in FIG. 6). Then, when number button 225b1 "5" is selected, the program being viewed is switched to channel 5ch of BS broadcast.

As described above, the configuration allows buttons to emit light in the order in which the user should select, and thus, operation terminal 3 allows the user to navigate the operation for selecting a program, in such a manner that a sequential operation for selecting a program which is the same as in the prior art allows the program to the user's taste to be viewed.

Next, appearance of remote control 3c0 and appearance of remote control 3c1 in FIG. 6 show the manner in which correspondence is made between number buttons and channels in accordance with a different method from the above described method in the case where the number of channels is great. In the case where there are many channels, as with the above described cable television, and the number of buttons is insufficient, as shown in appearance of remote control 3c0 and appearance of remote control 3c1, number buttons "0" to "9" and tuning mode switching button 22MS for switching between the below described normal tuning mode and the below described direct tuning mode are added in the configuration. In addition, the number buttons "0" to "9" and tuning mode switching button 22MS are formed so as to emit light when operation terminal controlling part 17 allocates information on the user's taste.

In normal tuning mode, selection of buttons is carried out a number of times in order to view a program, in the same manner as in the tuning method for cable television. In the case where a program on channel 35ch, for example, is viewed, channel 35ch is selected in accordance with a method for selecting number button 223c0 "3" and then selecting number button 225 c1 "5," so that the program can be viewed. In direct tuning mode, a number button is selected only once, so that the program on the channel corresponding to the number button that has been preset in advance can be viewed. When switched to direct tuning mode, television system 1 switches the program using channel table 14 for direct tuning mode in FIG. 8.

FIG. 8 shows the relationship between channels 14ad and preset numbers 14bd in direct tuning mode. Channel 8ch corresponds to the preset number "1" (number button "1"), channel 10ch corresponds to the preset number "2" (number button "2"), channel 52ch corresponds to the preset number "3" (number button "3"), channel 64ch corresponds to the preset number "4" (number button "4"), channel 49ch corresponds to the preset number "5" (number button "5"), channel 51ch corresponds to the preset number "6" (number button "6"), and channel 11ch corresponds to the preset number "7" (number button "7"). Here, the preset numbers "8," "9" and "0" are not yet set so as to correspond to channels.

Here, in the case where channel 49ch is recommended as a program to the user's taste, channel 49ch is in channel table 14 in direct tuning mode, and therefore, tuning mode switching button 22MS emits light (see appearance of remote control 3c0 in FIG. 6). When running mode switching button 22MS, which is emitting light, is selected, next, number button 225c1 "5" emits light (see appearance of remote control 3c1 in FIG. 6). Then, when number button 225c1, which is emitting light, is selected, channel table 14 in direct tuning mode is used to switch the program being viewed to the program on channel 49ch.

As described above, tuning mode switching button 22 MS is provided on the operation terminal, and channel table 14 in direct tuning mode is used, so that information on the user's taste for programs to the user's taste is allocated to the corresponding number buttons on the operation terminal. As a result, one-to-one correspondence can be made between pieces of information on the user's taste and portions of selection part 21, even in the case of multiple channels, by switching the tuning mode, so that a program can be selected through one-time operation for selecting a program in order to view a recommended program to the user's taste.

Here, channels in channel table 14 in direct tuning mode, which is used when the mode is switched to direct tuning mode, may be preset by the user, or the television broadcast reception device may automatically allocate the channels in the configuration. In the case where the television system is provided with determination part 10a for determining the degree of the user's taste for different programs, television broadcast reception device 2 allocates preset numbers in sequence starting from the channel for the program to the user's taste having a high degree of the user's taste for the program which has been determined by determination part 10a. Concretely, when the channels for the recommended programs to the user's taste are 1ch, 3ch, 5ch, 11ch, 25ch and 35ch, it is assumed that the degree of the user's taste for the programs broadcast on these channels is higher in the order of 1ch, 11ch, 35ch, 5ch, 25ch, 3ch. In this case, the television broadcast reception device automatically presets the numbers in such a manner that the television broadcast reception device makes 1ch, 11ch, 35ch, 5ch, 25ch and 3ch correspond to the preset number "1," the preset number "2," the preset number "3," the preset number "4," the preset number "5" and the preset number "6," respectively.

As described above, tuning mode switching button 22MS is provided in the configuration, so that buttons emit light in the order for the user to select, and thus, operation terminal 3 allows the user to navigate the operation for selecting a program, so that a program to the user's taste can be viewed through a sequential operation for selecting a program.

### (Fourth Embodiment)

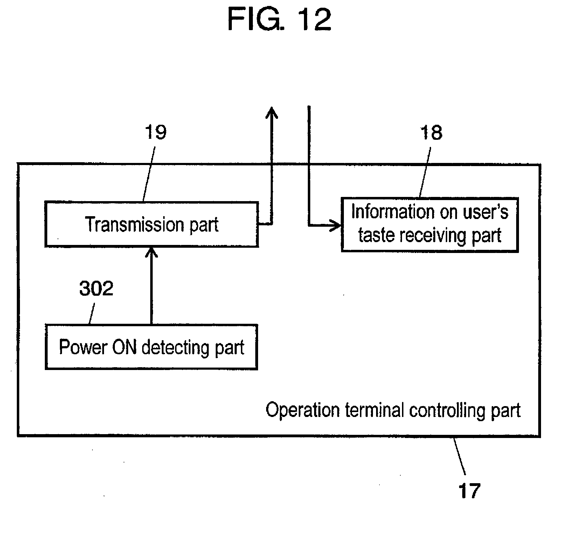

The fourth embodiment corresponding to the present invention is described with reference to FIGS. 11 and 12. The fourth embodiment is provided with location change detecting part 301 for detecting change in the location of operation terminal 3, in addition to the configuration of television system 1 according to the first to third embodiments, in order to recommend programs to the user's taste to the user with appropriate timing. When change in the location is detected, operation terminal 3 transmits a signal indicating that change in the location of operation terminal 3 has been detected to television broadcast reception device 2. Thus, television broadcast reception device 2 is formed so as to detect programs to the user's taste when it receives the signal and allow output part 20 of operation terminal 3 to output information showing that programs to the user's taste exist. Here, descriptions for parts of the configuration that are the same as in the first to third embodiments are omitted. The operation of this configuration is described below.

In the case where location change detecting part 301 of operation terminal 3 detects change in the location of operation terminal 3, operation terminal controlling part 17 informs television broadcast reception device 2 of the change in the location of operation terminal 3. Then, when program recommendation controlling part 9 in television broadcast reception device 2 learns of the change in the location of operation terminal 3, it starts recommending the programs to the user's taste.

Separately from this, as shown in FIG. 12, television system 1 is formed in such a manner that when the power of television broadcast reception device 2 is turned on, information showing that programs to the user's taste exist is outputted. Here, the other parts in the configuration are the same as in the first to third embodiments. In accordance with the operation of this configuration, power ON detecting part 302 detects turning ON of the power when the power of television broadcast reception device 2 is turned on. As a result of this detection, program recommendation controlling part 9 starts recommending programs to the user's taste. Here, the power may be turned on through operation of operation terminal 3, or the power may be turned on directly on television broadcast reception device 2.

As described above, the television system according to these embodiments is formed so as to detect change in the location of operation terminal 3 and allow output part 20 to output information showing that programs to the user's taste exist when change is detected. In addition, when the power of television broadcast reception device 2 is turned on, information showing that programs to the user's taste exist is outputted in the configuration. This is in order to make it possible to recommend programs to the user with such timing that the probability of the user zapping the channel in order to determine the program to be viewed when the user picks up operation terminal 3 or the user starts viewing television. As a result, programs to the user's taste can be recommended to the user with appropriate timing.

### (Fifth Embodiment)

The fifth embodiment is described with reference to FIG. 12. This fifth embodiment is formed in such a manner that output part 20 stops outputting information showing that programs to the user's taste exist when a program to the user's taste is selected in the case where output part 20 outputs information showing that programs to the user's taste exist in the configuration of television system 1 according to the first to fourth embodiments, in order to reduce the power consumed by operation terminal 3. In the case where a program is selected through selection part 21 when output part 20 is outputting information showing that programs to the user's taste exist, operation terminal controlling part 17 instructs output part 20 to stop outputting. Here, descriptions for parts in the configuration that are the same as in the first to fourth embodiments are omitted.

In addition, in another possible configuration according to the present embodiment, output part 20 stops outputting information showing that programs to the user's taste exist in the case where no program to the user's taste is selected for a predetermined period of time or longer after output part 20 outputs information showing that programs to the user's taste exist. In this configuration, time measuring part 16 in television broadcast reception device 2 has a timer function and the timer is started at the point in time when program recommendation controlling part 9 recommends operation terminal 3 programs to the user's taste. Then, when the timer exceeds a predetermined period of time (for example 5 minutes), program recommendation controlling part 9 instructs operation terminal controlling part 17 in operation terminal 3 to stop output part 20, and stops and resets the timer. In addition, in the case where a program is selected within the predetermined period of time and data transmitting and receiving part 11 receives selected program information, the timer is stopped by program recommendation controlling part 9 and reset.

As described above, in the television system according to these embodiments, output part 20 stops outputting information showing that programs to the user's taste exist when a program to the user's taste is selected by selection part 21 in the case where output part 20 outputs information showing that programs to the user's taste exist. In addition, in the case where no program to the user's taste is selected when a predetermined period of time or longer has elapsed after output part 20 outputs information showing that programs to the user's taste exist, output part 20 stops outputting information showing that programs to the user's taste exist. As a result, a situation where information showing that programs to the user's taste exist continues being outputted can be avoided, and the power consumed by operation terminal 3 can be reduced by stopping the output. In addition, a configuration where output part 20 does not output information showing that programs to the user's taste exist in the case where the program viewed by the user at the time is a program to the user's taste can also gain the effects of reducing the consumed power, in the same manner as the above described configuration.

### (Sixth Embodiment)

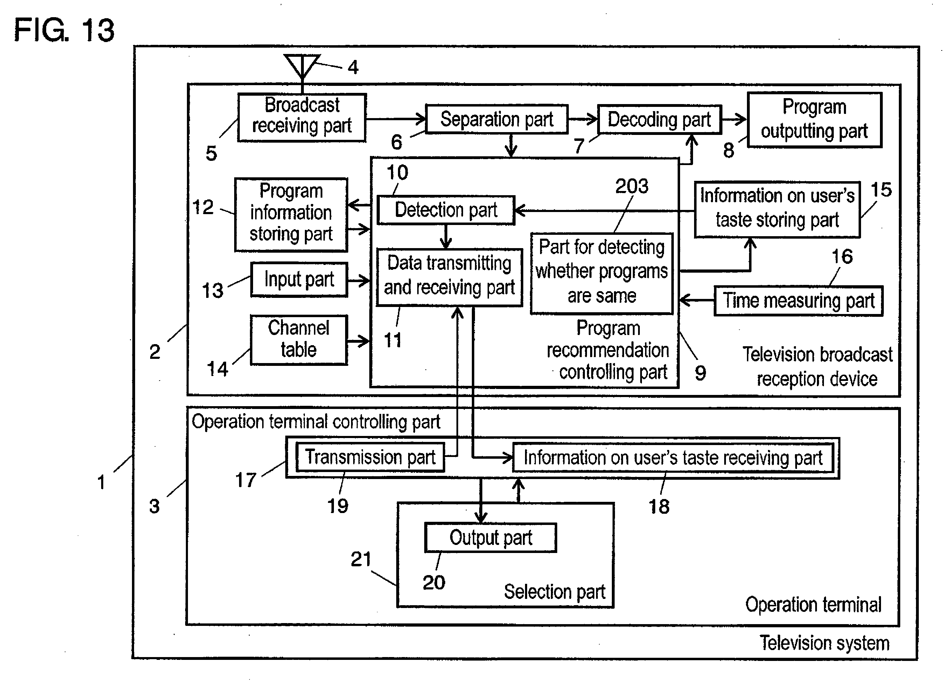

The sixth embodiment is described with reference to FIG. 13. In the sixth embodiment, the power consumed by television broadcast reception device 2 is reduced. In order to do so, part for detecting whether programs are the same 203 determines whether or not the program to the user's taste detected by detection part 10 in television broadcast reception device 2 and the program outputted by program outputting part 8 at the time are the same in the configuration of television system 1 according to the first to fifth embodiments. In the case where it is determined that the program to the user's taste and the program outputted by program outputting part 8 are the same, data transmitting and receiving part 11 stops transmitting information on the user's taste for the programs to the user's taste detected by detection part 10 to operation terminal 3 in the configuration. Here, descriptions for parts in the configuration that are the same as in the first to fifth embodiments are omitted.

In the television system having the above described configuration according to the present embodiment, television broadcast reception device 2 does not transmit information on the user's taste to operation terminal 3 in the case where the program being viewed by the user and the detected program to the user's taste are the same, and therefore, the power consumed by television broadcast reception device 2 can be reduced. Furthermore, operation terminal 3 does not receive information on the user's taste, and therefore, output part 20 does not output information showing that programs to the user's taste exist, and thus, the power consumed by operation terminal 3 can also be reduced.

### (Seventh Embodiment)

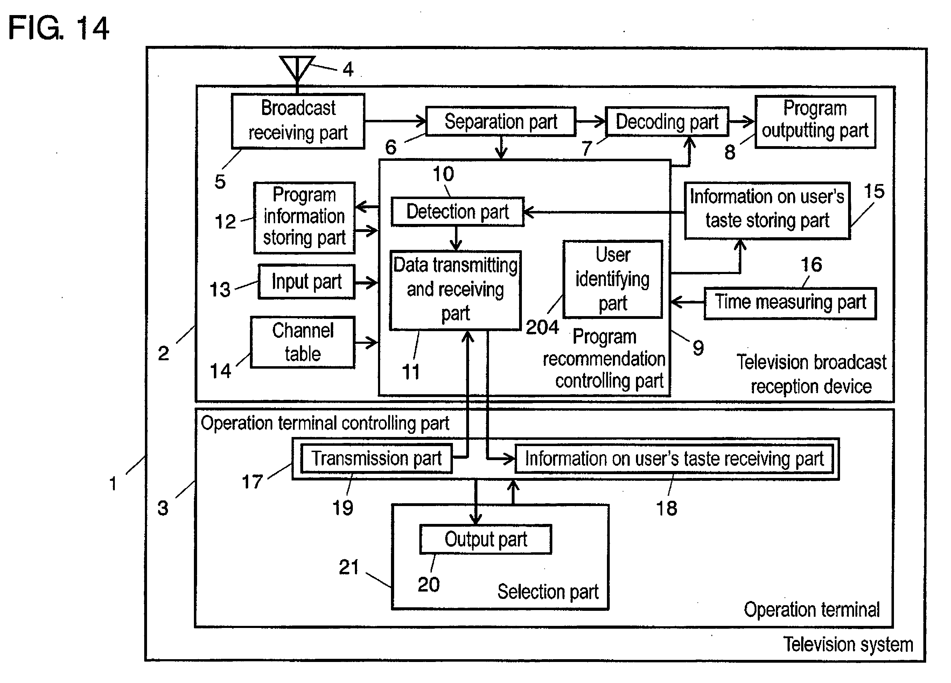

The seventh embodiment is described with reference to FIG. 14. In the seventh embodiment, programs to respective users' tastes are recommended to the users in the case where the television is shared by a number of users. In order to do so, television system 1 has user identifying part 204 for identifying the user in the configuration of television system 1 according to the first to sixth embodiments. Output part 20 is formed so as to output information showing that programs to the identified user's taste exist. Here, descriptions for parts in the configuration that are the same as in the first to sixth embodiments are omitted.

The present embodiment identifies different users and provides information on the different users' tastes, and thus, information on users' tastes is stored in different regions in information on user's taste storing part 15 in advance for different users. Thus, user identifying part 204 may switch the information on the user's taste when it identifies information on individuals using identification numbers or through confirmation of fingerprints, or a button for switching the user may be prepared on operation terminal 3 or television broadcast reception device 2. Here, switching of the user means switching of the information on the user's taste. Through this operation, the user is identified and the information on the identified user's taste is stored in a different region in information on user's taste storing part 15, so that detection part 10 can detect programs to the user's taste based on the information on the identified user's taste.

As described above, the television system according to the present embodiment has user identifying part 204 for identifying the user, and output part 20 outputs information showing that programs to the identified user's taste exist. This is in order to make it possible to recommend programs to the taste of the user viewing the television at the time in the case where programs are recommended to one of a number of users, for example family members who share one television, and which user is viewing the television is not always determined. As a result, even in the case where a television is shared by a number of users, programs to different users' tastes can be recommended.

Here, operation terminal 3 may have a function of detecting programs to the user's taste based on program information and information on the user's taste, instead of television broadcast reception device 2. When operation terminal 3 has this function, it becomes unnecessary to transmit information on the user's taste from television broadcast reception device 2 to operation terminal 3 in order to recommend programs to the user's taste on operation terminal 3, and programs to the user's taste can be recommended on the operation terminal even in a television broadcast reception device where programs are not recommended as in the present embodiment.

In addition, television broadcast reception device 2 according to the above described embodiment may be formed so that information on the user's taste can be transmitted using an electrical communication line, for example the internet, and operation terminal 3 can be made to receive television broadcasts and display this on a screen, like cellular phones. In the case of a configuration where the system can be connected to an electrical communication line, for example the internet, information on the user's taste that is transmitted from television broadcast reception device 2 using the electrical communication line is acquired by operation terminal 3 using the electrical communication line. Thus, information showing that programs to the user's taste exist is outputted based on the received information on the user's taste, and an outputted and recommended program to the user's taste is selected, so that the selected program to the user's taste can be displayed on the screen of the operation terminal 3 and viewed. In this manner, the present television system transmits information on the user's taste using an electrical communication line, for example the internet, so that a program to the user's taste can be viewed through a simple operation.

In addition, though the received television broadcasts are digital television broadcasts in the above described embodiments, analog television broadcasts may be received, or different types of broadcasts, such as terrestrial wave broadcasts, or satellite broadcasts, may be received, as long as the configuration allows for implementation of the present invention.

In addition, it is also possible for operation terminal 3 to have the same table as channel table 14 in television broadcast reception device 2 according to the first to seventh embodiments. Thus, the channel corresponding to the button selected by the user can be detected on the operation terminal, and the detected channel can be transmitted to data transmitting and receiving part 11 in television broadcast reception device 2 as information on the user's taste, so that it becomes possible to view the program to the user's taste without any steps for finding the channel using channel table 14 in television broadcast reception device 2.

In addition, output part 20 for outputting information showing that programs to the user's taste exist may be able to show that programs to the user's taste exist according to the above descried embodiments. Accordingly, the method is not limited to one for illuminating program selection buttons, and which programs are programs to the user's taste and which selection buttons should be pressed may be shown to the user through speech sound or the like, and any apparatus which can show that programs to the user's taste exist in such a manner that the user can see this on operation terminal 3 may be used. That is to say, in the case where it is shown that programs to the user's taste exist through speech sound, the information showing that programs to the user's taste exist refers to a speech sound signal which is outputted through speakers for outputting speech sound or the like, and indicates which programs are programs to the user's taste and which selection buttons should be pressed. In the case where it is shown that programs to the user's taste exist through a speech sound or the like as described above, it is not necessary for selection part 21 to have output part 20 like in FIGS. 1 and 5, and selection part 21 and output part 20 may be arranged separately on operation terminal 3.

In addition, a display may be arranged on operation terminal 3, so that the display can show that programs to the user's taste exist. In this case, information showing that programs to the user's taste exist refers to an electrical signal indicating text information which shows which programs are programs to the user's taste and which selection buttons should be pressed.

### INDUSTRIAL APPLICABILITY

The television system, the broadcast reception device and the operation terminal according to the present invention allow the user to be easily informed that a program to the user's taste is being broadcast when the user looks at the operation terminal, and it becomes possible to select the program, and therefore, are useful as a means for recommending programs to the user's taste.

## Claims

1. A television system comprising:
a television broadcast reception device (2) including:
a broadcast receiving part (5) for receiving a television broadcast;
a detection part (10) for detecting a program to a user's taste from the television broadcast;
a data transmitting and receiving part (11) for transmitting information on the user's taste for identifying the programs to the user's taste detected by the detection part (10) to an operation terminal (3) and receiving selected program information transmitted from the operation terminal (3); and
an operation terminal (3) including:
an information on user's taste receiving part (18) for receiving the information on the user's taste outputted from the data transmitting and receiving part (11);
an output part (20) for outputting information showing that the program to the user's taste exists based on the information on the user's taste received by the information on user's taste receiving part (18);
a selection part (21) for selecting the program to the user's taste outputted by the output part (20); and
a transmission part (19) for transmitting selected program information for identifying the program to the user's taste selected by the selection part (21) to the data transmitting and receiving part (11),
**characterised in that** the operation terminal (3) further comprises a location change detecting part,
a signal is transmitted to the television broadcast reception device (2) when change in a location of the operation terminal (3) is detected,
the television broadcast reception device (2) that receives the signal detects a program to the user's taste, and
the output part outputs Information showing that the detected program to the user's taste exists.

2. The television system according to Claim 1, wherein the output part (20) outputs information showing that different programs to the user's taste exist in different formats in a case where the operation terminal (3) receives a number of pieces of information on the user's taste.

3. The television system according to Claim 1, wherein the operation terminal (3) has numbers corresponding to respective channels of the television broadcast received by the broadcast part, and allocates the information on the user's taste detected by the detection part to the numbers corresponding to the respective channels.

4. The television system according to Claim 1, further comprising a determining part (101) for determining a degree of the user's taste for programs, wherein the degree of the user's taste for programs that is determined by the determination part (101) is transmitted to the output part (20), and the output part (20) outputs information showing that different programs to the user's taste exist in different formats based on the degree of the user's taste for programs.

5. The television system according to Claim 1, wherein the output part (20) stops outputting information showing that the program to the user's taste exists in a case where the program to the user's taste is not selected by the selection part after a predetermined period of time has elapsed after the output part outputs information showing that the program to the user's taste exists.

6. The television system according to Claim 1, wherein the television broadcast reception device (2) determines whether or not a program to the user's taste detected by the detection part and a program viewed by the user are the same, and the data transmitting and receiving part (11) does not transmit the information on the user's taste for the program to the user's taste to the operation terminal (3) in a case where the two are the same.

7. The television system according to Claim 1, further comprising a user identifying part for identifying a user, wherein
in a case where a user is identified by the user identifying part, the detection part (10) detects a program to the user's taste based on the information on the identified user's taste, and the output part outputs information showing that the program to the user's taste detected by the detection part exists.

## Patentansprüche

1. Fernsehsystem, umfassend:
eine Fernsehrundfunk-Empfangsvorrichtung (2), aufweisend:
einen Rundfunkempfangsteil (5) zum Empfangen von Fernsehrundfunk;
einen Erkennungsteil (10) zum Erkennen eines Programms nach dem Geschmack eines Benutzers aus dem Fernsehrundfunk;
einen Datensende- und -empfangsteil (11) zum Senden von Informationen über den Geschmack des Benutzers zum Identifizieren der durch den Erkennungsteil (10) erkannten Programme nach dem Geschmack des Benutzers an ein Bedienterminal (3) und Empfangen von ausgewählten Programminformationen, die vom Bedienterminal (3) gesendet werden; und
ein Bedienterminal (3), aufweisend:
einen Benutzergeschmacksinformations-Empfangsteil (18) zum Empfangen der Informationen über den Geschmack des Benutzers, die vom Datensende- und - empfangsteil (11) ausgegeben werden;
einen Ausgabeteil (20) zum Ausgeben von Informationen, die anzeigen, dass das Programm nach dem Geschmack des Benutzers existiert, basierend auf den Informationen über den Geschmack des Benutzers, die durch den Benutzergeschmacksinformations-Empfangsteil (18) empfangen werden;
einen Auswahlteil (21) zum Auswählen des Programms nach dem Geschmack des Benutzers, das durch den Ausgabeteil (20) ausgegeben wird; und
einen Sendeteil (19) zum Senden von ausgewählten Programminformationen zum Identifizieren des durch den Auswahlteil (21) ausgewählten Programms nach dem Geschmack des Benutzers an den Datensende- und - empfangsteil (11),
**dadurch gekennzeichnet, dass** das Bedienterminal (3) ferner einen Standortänderungserkennungsteil umfasst,
ein Signal an die Fernsehrundfunk-Empfangsvorrichtung (2) gesendet wird, wenn eine Änderung des Standorts des Bedienterminals (3) erkannt wird,
die Fernsehrundfunk-Empfangsvorrichtung (2), die das Signal empfängt, ein Programm nach dem Geschmack des Benutzers erkennt, und
der Ausgabeteil Informationen ausgibt, die anzeigen, dass das erkannte Programm nach dem Geschmack des Benutzers existiert.

2. Fernsehsystem nach Anspruch 1, wobei der Ausgabeteil (20) Informationen ausgibt, die anzeigen, dass verschiedene Programme nach dem Geschmack des Benutzers in verschiedenen Formaten existieren, falls das Betriebsterminal (3) eine Anzahl von Informationselementen über den Geschmack des Benutzers empfängt.

3. Fernsehsystem nach Anspruch 1, wobei das Bedienterminal (3) Nummern aufweist, die jeweiligen Kanälen des Fernsehrundfunks entsprechen, die durch den Rundfunkteil empfangen werden, und die durch den Erkennungsteil erkannten Informationen über den Geschmack des Benutzers den Nummern zuordnet, die den jeweiligen Kanälen entsprechen.

4. Fernsehsystem nach Anspruch 1, ferner umfassend einen Bestimmungsteil (101) zum Bestimmen eines Grades des Geschmacks des Benutzers für Programme, wobei der Grad des Geschmacks des Benutzers für Programme, der durch den Bestimmungsteil (101) bestimmt wird, an den Ausgabeteil (20) gesendet wird, und der Ausgabeteil (20) basierend auf dem Grad des Geschmacks des Benutzers für Programme Informationen ausgibt, die anzeigen, dass verschiedene Programme nach dem Geschmack des Benutzers in verschiedenen Formaten existieren.

5. Fernsehsystem nach Anspruch 1, wobei der Ausgabeteil (20) das Ausgeben von Informationen, die anzeigen, dass das Programm nach dem Geschmack des Benutzers existiert, stoppt, falls das Programm nach dem Geschmack des Benutzers durch den Auswahlteil nicht ausgewählt wird, nachdem eine vorbestimmte Zeitdauer verstrichen ist, nachdem der Ausgabeteil die Informationen ausgibt, die anzeigen, dass das Programm nach dem Geschmack des Benutzers existiert.

6. Fernsehsystem nach Anspruch 1, wobei die Fernsehrundfunk-Empfangsvorrichtung (2) bestimmt, ob ein durch den Auswahlteil erkanntes Programm nach dem Geschmack des Benutzers und ein durch den Benutzer angesehenes Programm gleich sind oder nicht, und der Datensende- und -empfangsteil (11) die Informationen über den Geschmack des Benutzers für das Programm nach dem Geschmack des Benutzers nicht an das Bedienterminal (3) sendet, falls die beiden gleich sind.

7. Fernsehsystem nach Anspruch 1, ferner umfassend einen Benutzeridentifizierungsteil zum Identifizieren eines Benutzers, wobei,
falls ein Benutzer durch den Benutzeridentifizierungsteil identifiziert wird, der Erkennungsteil (10) ein Programm nach dem Geschmack des Benutzers basierend auf den Informationen über den Geschmack des identifizierten Benutzers erkennt,
und der Ausgabeteil Informationen ausgibt, die anzeigen, dass das durch den Erkennungsteil erkannte Programm nach dem Geschmack des Benutzers existiert.

## Revendications

1. Système de télévision comprenant :
un dispositif de réception de diffusion de télévision (2) comportant :
une partie de réception de diffusion (5) destinée à recevoir une diffusion de télévision ;
une partie de détection (10) destinée à détecter un programme au goût de l'utilisateur à partir de la diffusion de télévision ;
une partie d'émission et de réception de données (11) destinée à émettre des informations concernant le goût de l'utilisateur pour identifier les programmes au goût de l'utilisateur détectés par la partie de détection (10) vers un terminal de commande (3) et pour recevoir des informations de programmes sélectionnés émises depuis le terminal de commande (3) ; et
un terminal de commande (3) comportant :
une partie de réception d'informations concernant le goût de l'utilisateur (18) destinée à recevoir les informations concernant le goût de l'utilisateur délivrées en sortie à partir de la partie d'émission et de réception de données (11) ;
une partie de sortie (20) destinée à délivrer en sortie des informations montrant l'existence du programme au goût de l'utilisateur sur la base des informations concernant le goût de l'utilisateur reçues par la partie de réception d'informations concernant le goût de l'utilisateur (18) ;
une partie de sélection (21) destinée à sélectionner le programme au goût de l'utilisateur délivré en sortie par la partie de sortie (20) ; et
une partie d'émission (19) destinée à émettre des informations de programmes sélectionnés pour identifier le programme au goût de l'utilisateur sélectionné par la partie de sélection (21) vers la partie d'émission et de réception de données (11),
**caractérisé en ce que** le terminal de commande (3) comprend en outre une partie de détection de changement d'emplacement,
un signal est émis vers le dispositif de réception de diffusion de télévision (2) lorsqu'un changement d'un emplacement du terminal de commande (3) est détecté,
le dispositif de réception de diffusion de télévision (2) qui reçoit le signal détecte un programme au goût de l'utilisateur, et
la partie de sortie délivre en sortie des informations montrant l'existence du programme détecté au goût de l'utilisateur.

2. Système de télévision selon la revendication 1, dans lequel la partie de sortie (20) délivre en sortie des informations montrant l'existence de différents programmes au goût de l'utilisateur dans différents formats dans le cas où le terminal de commande (3) reçoit un certain nombre d'éléments d'informations concernant le goût de l'utilisateur.

3. Système de télévision selon la revendication 1, dans lequel le terminal de commande (3) a des nombres correspondant à des canaux respectifs de la diffusion de télévision reçue par la partie de réception de diffusion, et attribue les informations concernant le goût de l'utilisateur détectées par la partie de détection aux nombres correspondant aux canaux respectifs.

4. Système de télévision selon la revendication 1, comprenant en outre une partie de détermination (101) destinée à déterminer un degré du goût de l'utilisateur pour des programmes, où le degré du goût de l'utilisateur pour des programmes qui est déterminé par la partie de détermination (101) est émis vers la partie de sortie (20), et la partie de sortie (20) délivre en sortie des informations montrant l'existence de différents programmes au goût de l'utilisateur dans différents formats sur la base du degré du goût de l'utilisateur pour des programmes.

5. Système de télévision selon la revendication 1, dans lequel la partie de sortie (20) cesse de délivrer en sortie des informations montrant l'existence du programme au goût de l'utilisateur dans le cas où le programme au goût de l'utilisateur n'est pas sélectionné par la partie de sélection après l'écoulement d'une durée prédéterminée après que la partie de sortie délivre en sortie des informations montrant l'existence du programme au goût de l'utilisateur.

6. Système de télévision selon la revendication 1, dans lequel le dispositif de réception de diffusion de télévision (2) détermine si un programme au goût de l'utilisateur détecté par la partie de détection et un programme visualisé par l'utilisateur sont les mêmes ou non, et la partie d'émission et de réception de données (11) n'émet pas les informations concernant le goût de l'utilisateur pour le programme au goût de l'utilisateur vers le terminal de commande (3) dans le cas où les deux programmes sont les mêmes.

7. Système de télévision selon la revendication 1, comprenant en outre une partie d'identification d'utilisateur pour identifier un utilisateur, dans lequel
dans le cas où un utilisateur est identifié par la partie d'identification d'utilisateur, la partie de détection (10) détecte un programme au goût de l'utilisateur sur la base des informations concernant le goût de l'utilisateur identifié, et la partie de sortie délivre en sortie des informations montrant l'existence du programme au goût de l'utilisateur détecté par la partie de détection.
